# EUROPEAN PATENT SPECIFICATION

(11) **EP 1 597 099 B1**
(45) Date of publication and mention of the grant of the patent: **24.05.2006**
(21) Application number: 04713770.8
(22) Date of filing: 23.02.2004
(51) Int. Cl.: B60H 1/00

(54) **THERMOELECTRIC PUMP ASSEMBLY**
THERMOELEKTRISCHE WÄRMEPUMPEANORDNUNG
ENSEMBLE DE POMPE THERMOELECTRIQUE

(30) Priority: 27.02.2003 US 450435 P
(43) Date of publication of application: 23.11.2005
(73) Proprietor: Intier Automotive Inc., Troy, MI 48084 (US)
(72) Inventor: BECKLEY, Daniel, Vern, Fenton, MI 48430 (US)
(74) Representative: Pfiz, Thomas
(86) International application number: PCT/US2004/005388
(87) International publication number: WO 2004/076213

(56) References cited:
- WO-A-02/00458
- US-A- 3 355 900
- US-A- 5 099 649
- US-A- 5 658 652

## Description

### Technical Field

The present invention relates to structural components of a vehicle, and in particular to a thermoelectric pump assembly that changes a temperature of a structural component of a vehicle when electric current is directed through a thermoelectric device in thermal communication with the structural component.

### Background of the Invention

Thermoelectric principles that are the basis for today's thermoelectric industry were first discovered by early 19th century scientists Thomas Seebeck and Jean Peltier. Thomas Seebeck found that if a temperature gradient is placed across the junctions of two dissimilar conductors, an electrical current would flow. Jean Peltier, on the other hand, discovered "the Peltier effect." The Feltier effect occurs when electric current is passed through two dissimilar electrical conductors so as to cause heat emission or absorption at the junction of the two dissimilar conductors.

It was only after mid-20th Century advancements in semiconductor technology, however, that practical applications for the Peltier effect permitted the manufacturing of thermoelectric modules. The semiconductors material of choice for producing the F'eltier effect is typically Bismuth Telluride. Bismuth Telluride is commonly chosen due to its easily optimized heat pumping capabilities. In addition to optimized heat pumping capabilities, Bismuth Telluride's charge carriers can be easily controlled by thermoelectric module designers. Thus, Bismuth Telluride, or any other suitable semiconductor material, may be used by a designer to manufacture a thermoelectric module by soldering electrically conductive material, such as plated copper, to a top surface and bottom surface of the semiconductor material. The second dissimilar material required for the Peltier effect includes copper connection leads that extend from a power supply.

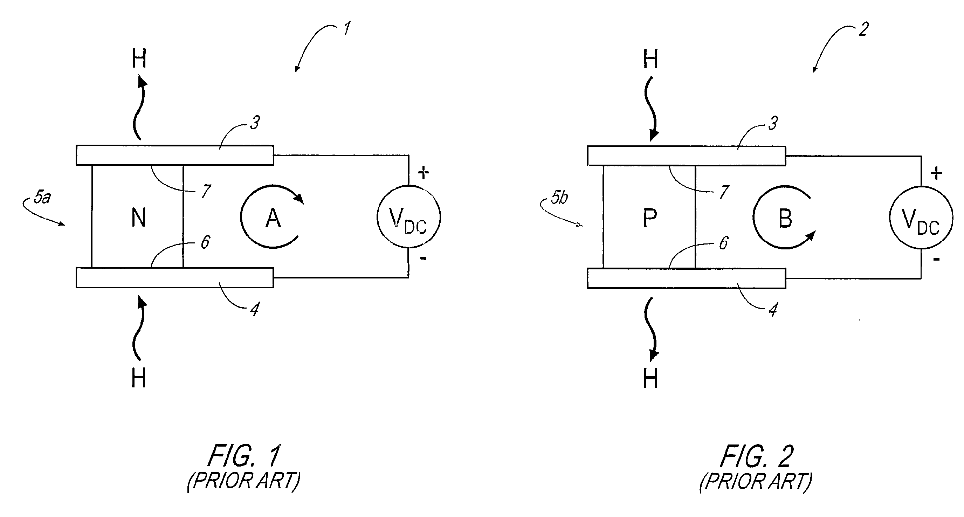

As seen in Figures 1 and 2, heat is moved (i.e. pumped) by a circuit 1, 2 generally in the direction of the arrow, H, depending on the direction of the charge carrier movement through the circuit 1, 2. Each circuit 1, 2 includes an upper copper plate 3, a lower copper plate 4, and an N-type semiconductor material 5a (Figure 1) or a P-type semiconductor material 5b (Figure 2). Referring initially to Figure 1, a clockwise arrow, A, illustrates how electrons with a negative charge, employs the charge carrier movement to create the bulk of the Peltier effect. When a DC voltage source, V_{DC}, is connected to the circuit 1 as shown, electrons will be repelled by the negative pole and attracted by the positive pole of the supply, V_{DC}, which forces the electron flow in the clockwise direction of the arrow, A. As a result, because the electrons flow through the N-type semiconductor material 5a from lower copper plate 4 to the upper copper plate 3, the heat, H, is absorbed at a lower junction 6 of the circuit 1 and then actively transferred to a top junction 7 of the circuit 1 by charge carriers moving through the semiconductor material 5a.

As shown in Figure 2, the P-type semiconductor material 5b is manufactured so that the charge carriers are positive, which are known in electronics as 'holes.' The holes enhance the electrical conductivity of the P-type crystaline structure of the semiconductor material 5b, thereby allowing electrons to flow more freely through the material when a voltage is applied. Once the voltage is applied from the source, V_{DC}, as shown, positive charge carriers are repelled by the positive pole of the DC supply and attracted to the negative pole. As a result, the 'hole' current flows in a direction opposite to that of electron flow, which is generally illustrated by the counter-clockwise arrow, B. Because the charge carriers inherent in the P-type semiconductor material 5b convey the heat through the conductor, use of the P-type semiconductor material 5b results in the heat, H, being drawn toward the negative pole of the power supply, V_{DC}, and away from the positive pole.

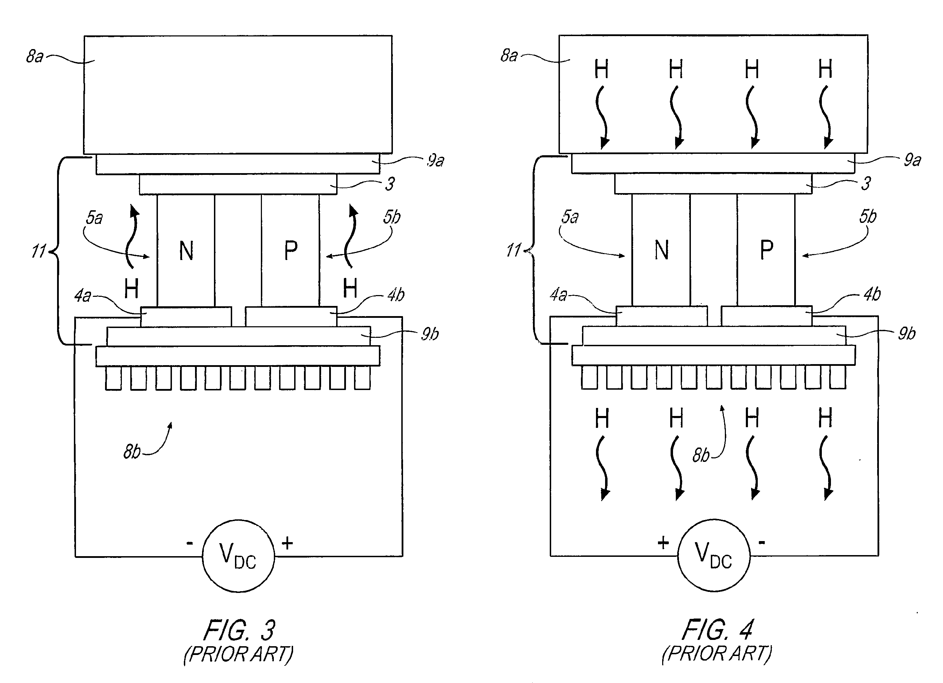

As illustrated in Figures 3 and 4, N-type and P-type semiconductor pellets 5a, 5b may be arranged in a 'couple,' such that a junction is formed at an upper copper plate 3. Upper and lower ceramic plates 9a, 9b isolate a series circuit 11 including the couple, which is hereinafter referred to as a thermoelectric module 11. Based on the principles discussed above, the thermoelectric module 11 applies heat, H, to an object 8a (Figure 3), or, alternatively, the thermoelectric module 11 removes heat, H, from the object 8a, which is subsequently transferred to a heat sink 8b (Figure 4). More specifically, in relation to Figure 3, the lower copper plate 4b of the P-type semiconductor pellet 5b is connected to the positive voltage potential of the source, V_{DC}, and the lower copper plate 4a of the N-type semiconductor pellet 5a is similarly connected to the negative side of the source, V_{DC}. As a result, the positive charge carriers (i.e, 'holes') in the P-type semiconductor material 5b are repelled by the positive voltage potential and attracted by the negative pole; concurrently, the negative charge carriers (i.e. electrons) in the N-type semiconductor material 5a are repelled by the negative potential and attracted by the positive pole of the supply, V_{DC}. Thus, heat, H is applied from the thermoelectric module 11 to the object 8a. Conversely, when the polarity of the supply, V_{DC}, is reversed (Figure 4), heat, H, is removed from the object 8a by the thermoelectric module 11, which is then released by the heat sink 8b. However, the heat sink 8b of a conventional thermoelectric module 11 occupies valuable real estate when used in an automotive application.
Document US 3,355,900, which is considered as the closest prior art, discloses a thermoelectric pump assembly using the Peltier effect.

### Summary of the Invention

The invention comprises a thermoelectric pump assembly. The thermoelectric pump assembly includes a vehicular structure and a thermoelectric pump device in thermal communication with the vehicle structure, wherein the thermoelectric device changes a temperature of the vehicular structure when electric current is directed through the thermoelectric device.

A method for manufacturing a thermoelectric pump assembly is also disclosed. The method includes the steps of arranging at least one thermoelectric module on a heat sink surface to form a thermoelectric device, securing the thermoelectric device to a vehicular structure such that the thermoelectric device is in thermal communication with the vehicle structure, arranging a heat sink duct over the thermoelectric device, and securing the heat sink duct to the vehicular structure.

### Brief Description of the Drawings

The present invention will now be described, by way of example, with reference to the accompanying drawings, in which:

Figure 1 illustrates a conventional N-type thermoelectric circuit;

Figure 2 illustrates a conventional P-type thermoelectric circuit;

Figure 3 illustrates a conventional thermoelectric module and a power supply having a first polarity;

Figure 4 illustrates another embodiment of the conventional thermoelectric module with the power supply having a second reversed polarity as that of Figure 3;

Figure 5 is a passenger compartment view of a thermoelectric pump assembly with the dashboard trim panel removed for clarity according to one embodiment of the present invention;

Figure 6 is a perspective view of a thermoelectric device including a plurality of thermoelectric modules according to one embodiment of the present invention; and

Figure 7 is a cross-sectional view of the thermoelectric pump assembly taken along line 7-7 of Figure 5.

### Description of the Preferred Embodiment

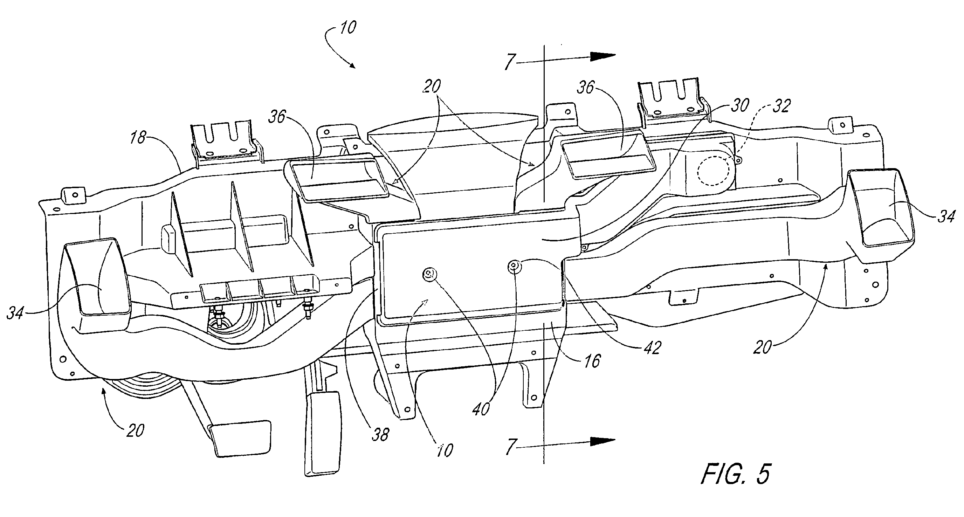

As illustrated in Figures 5-7, a thermoelectric pump assembly, designated at 10, is shown according to an embodiment of the invention. In general, thermoelectric pump assembly 10 includes a thermoelectric device 12 comprising at least one thermoelectric module 14 affixed to a vehicular structure 16 via a mechanical bond (e.g. by fastening or form-pressing), a chemical bond (i.e. with a thermal adhesive), or the like. The vehicular structure 16 may comprise, for example, a cross-car instrument panel (I/P) beam 1S and a heating and cooling system 20. Each thermoelectric module 14 substantially operates on the same principle relating to the Peltier effect as described above in relation to Figures 3 and 4. It should be noted that heat generation or absorption rates at the junction of each thermoelectric module 14 are proportional to the magnitude of the electric current and temperature of the junction.

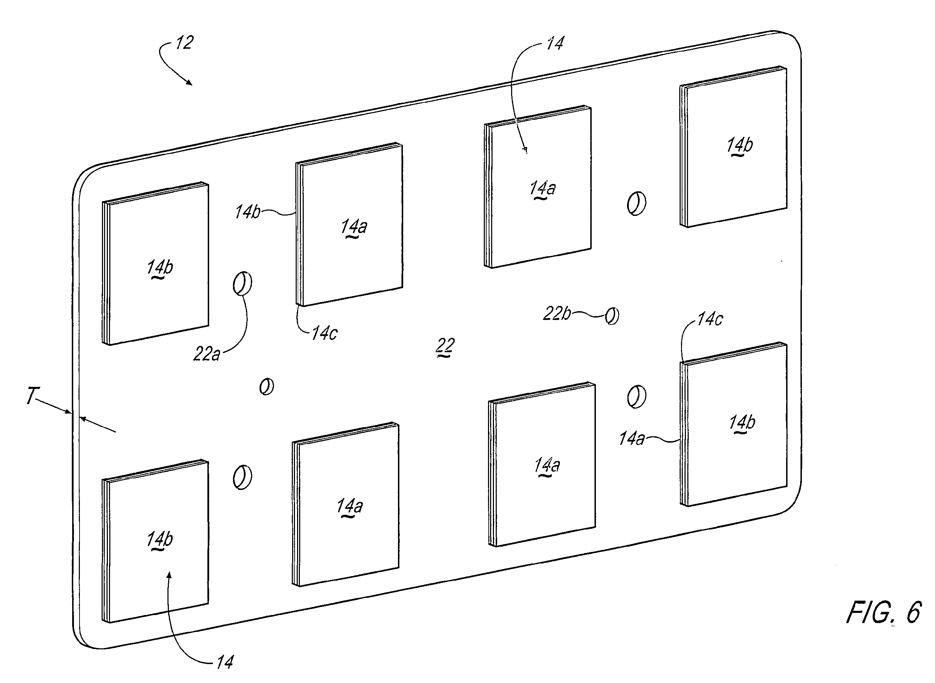

As seen in Figure 6, each thermoelectric module 14 includes a pair of ceramic plates, which are designated at layers 14a, 14b, and a plurality of N-type and P-type semiconductor couples sandwiched by upper and lower copper plates, which is designated generally at layer 14c. As illustrated, one of the layers 14a, 14b is adjacently affixed, via a mechanical or chemical bond, to a heat sink surface 22, having a thickness, T, which may also be referred to as a 'cooling plate.' The heat sink surface 22, which may include a plurality of fastener passages 22a, 22b (if mechanical fastening to vehicle structure 16 is implemented), is preferably composed of a material that has a high thermal conductivity that dissipates heat quickly, such as magnesium, aluminum, copper, or the like. The thermoelectric device 12 is shown to include eight thermoelectric modules 14 disposed in a two-by-four column and row arrangement on the heat sink surface 22. However, any desirable configuration, such as a square, circle, triangle, or any other uniform or nonuniform configuration of thermoelectric modules 14 on the heat sink surface 22 may be implemented. Additionally, the polarity of a power supply (not shown) connected to each thermoelectric module 14 may be referenced according to the layer 14a, 14b that is affixed to the heat sink surface 22. If desired, one or all of the thermoelectric modules 14 may be activated at any given time.

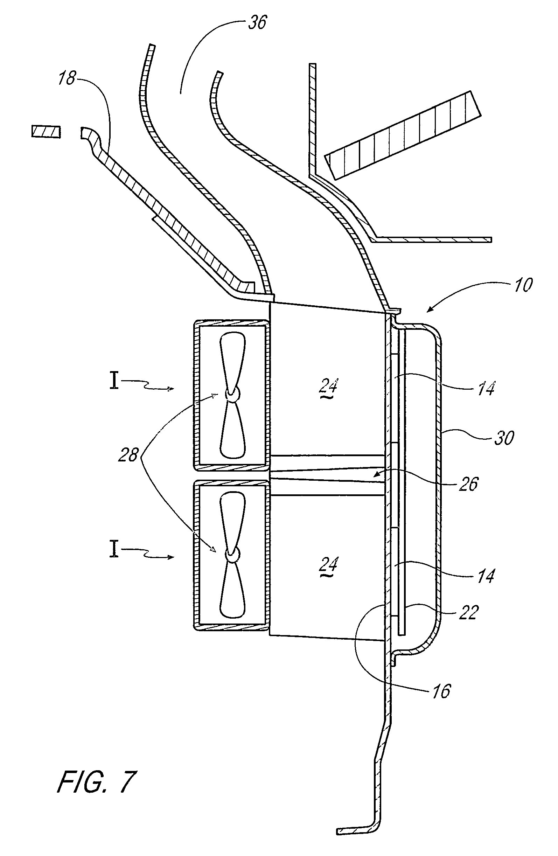

In reference to Figure 7, the thermoelectric modules 14 are intermediately located between the heat sink surface 22 and the vehicle structure 16. In accordance with the principles of the Peltier effect, when an electrical current is passed through the thermoelectric modules 14 in a specific direction, the vehicular structure 16, may be heated or cooled. According to the illustrated embodiment of the invention, the thermoelectric modules 14 operate on the heating and cooling system 20 portion of the vehicle structure 16, which includes a plurality of fins 24 disposed within a central air duct cavity 26. Because the fins 24 are generally positioned within (i.e. positioned in-line) and interface with the central air duct cavity 26, which is located proximate a plurality of fans 28, the fins 24 may be used as a heating or cooling element for the heating and cooling system 20 to treat ambient air, depending on the direction of the electrical current flowing through the thermoelectric modules 14. In operation, the fans 28 draw the ambient air into the heating and cooling system 20 about an air flow intake path, I, across the fins 24 so as to heat or cool the ambient air which is subsequently circulated though a plurality of passenger compartment ducts, such as, for example, front passenger compartment ductwork 34 (Figure 5), winter defroster ductwork 36, or the like.

As seen in Figure 5, the thermoelectric pump assembly 10 further comprises a heat sink duct 30 that may be fastened to the vehicle structure 16 by a plurality of fasteners 40, such as screws or bolts, extending through duct bores 42 of the heat sink duct 30. Although not shown in Figure 5, the fasteners 40 extend through the heat sink fastener passages 22b to mechanically engage the heat sink surface 22. In an alternative embodiment, the heat sink duct 30 may be held in place or fastened by at least one clamp or peripheral lip, which is shown generally at reference numeral 38. Functionally, the heat sink duct 30 seals the thermoelectric device 12 from moisture ingress, contaminates, and the other components in the passenger compartment-side of the firewall, while also directing warm air from the heat sink surface 22 to the engine compartment through an instrument panel beam port, which is shown in phantom at reference numeral 32. In an alternative embodiment, the heat sink duct 30 may direct the warm air from the heat sink surface 22 outside the vehicle to a driver- or passenger-side through the vehicle body sheet-metal (not shown).

As a result of including the thermoelectric pump assembly 10 in an automotive assembly, heater cores of a conventional heating and cooling system may be eliminated entirely. Additionally, if the fins 24 are used as a heating element, heat may be instantaneously provided by the heating and cooling system 20 in a situation when the vehicle's engine is cold-started such that heat is not available upon keying the ignition. Thus, the thickness, T, of the heat sink surface 22 may be designed accordingly to provide adequate material volume for a cooling or heating operation. Although the thermoelectric device 12 is shown as a component of the heating and cooling system 20, the thermoelectric device 12 may be applied to any vehicle application, such as, for example, a vehicular refrigerator (i.e. beverage cooler), a heat sink for other electronics, such as, for example, a radio/compact disc player, or the like.

## Claims

1. A thermoelectric pump assembly (10) comprising:
a heat sink surface (22);
a vehicular structure (16) spaced apart from said heat sink surface (22) and arranged to define a cavity therebetween,
at least one thermoelectric module (14) having opposing sides disposed in said cavity, one of said sides connected to said heat sink surface (22) the other one of said sides connected to said vehicular structure (16) that acts as a heatsink when electric current is directed through the thermoelectric module (14),
**characterized in that** said vehicular structure (16) is a load-bearing structure of the vehicle.

2. The thermoelectric pump assembly (10) according to Claim 1, wherein said load-bearing vehicular structure (16) is selected from the group consisting of a vehicle frame, a beam, a support, and the vehicle body.

3. The thermoelectric pump assembly (10) according to Claim 1, wherein the load-bearing vehicular structure (16) includes a plurality of fins (24) positioned in thermal communication with a central air duct cavity (26) of a heating and cooling system (20) and the thermoelectric pump assembly (10).

4. The thermoelectric pump assembly (10) according to Claim 3, wherein the heating and cooling system (20) includes at least one fan (28) that draws ambient air about an intake path (I) through the central air duct cavity (26) and across the plurality of fins (24).

5. The thermoelectric pump assembly (10) according to Claim 1, wherein the thermoelectric module (12) is affixed to the load-bearing vehicle structure (16) by a plurality of fasteners (40) that extend through fastener passages (22a) of the heat sink surface (22) to mechanically engage the vehicular structure (16).

6. The thermoelectric pump assembly (10) according to Claim 1, wherein the at least one thermoelectric module (14) is arranged on the heat sink surface (22) via a mechanical or chemical bond.

7. The thermoelectric pump assembly (10) according to Claim 1, wherein the thermoelectric pump assembly (10) further comprises a heat sink duct (30) affixed to the vehicular structure (16).

8. The thermoelectric pump assembly (10) according to Claim 7, wherein the heat sink duct (30) is affixed to the vehicular structure (16) by a plurality of fasteners (40) that extend through duct bores (42) of the beat sink duct (30),

9. The thermoelectric pump assembly (10) according to Claim 3, wherein the heat sink surface (22) includes a plurality of fastener passages (22b) that permits passage and mechanical engagement of the fasteners (40) with the air duct cavity (26).

10. The thermoelectric pump assembly (10) according to Claim 7, wherein the hear sink duct (30) is affixed to the vehicular structure (16) by at least one clamp or peripheral lip (38).

11. The thermoelectric pump assembly (10) according to Claim 7, wherein the heat sink duct (30) is affixed over an instrument panel beam port (32) to permit evacuation of warm air from the heat sink surface (22) to the engine compartment.

12. The thermoelectric pump assembly (10) according to Claim 5, wherein heat sink surface (22) is comprised af high thermal conductivity material selected from the group consisting of magnesium, aluminum, and copper.

13. A method of manufacturing a thermoelectric pump assembly (10), comprising the steps of
arranging at least one thermoelectric module (14) on a heat sink surface (22) to form a thermoelectric device (12);
securing the thermoelectric device (12) to a load-bearing vehicular structure (16) such that the thermoelectric device (12) is in thermal communication with the load-bearing vehicular structure (16);
arranging a heat sink duct (30) over the thermoelectric device (12); and
securing the heat sink duct (30) to the load-bearing vehicular structure (16).

14. The method according to Claim 13, wherein securing the thermoelectric device (12) further comprises the step of inserting fasteners (40) through a plurality of fastener passage (22a) in the heat sink surface (22) to mechanically engage the load-bearing vehicular structure (16).

15. The method according to Claim 13, wherein securing the heat sink duct (30) further comprises the step of inserting fasteners (40) through a plurality of heat sink duct bores (42) of a beat sink duct (30) and fastener passages (22b) in the heat sink surface (22) to mechanically engage the load-bearing vehicular structure (16).

16. The method according to Claim 13, further comprising the steps of:
directing an electric current through the at least one thermoelectric module (14) in a first direction to increase a temperature of the load-bearing vehicular structure (16) or directing the electric current through the thermoelectric module (14) in a second direction to decrease the temperature of the vehicle structure (16).

17. The method according to Claim 16, further comprising the step of drawing ambient air across the vehicular structure (16).

## Patentansprüche

1. Thermoelektrische Pumpe-Anordnung (10), umfassend:
eine Wärmesenkenoberfläche (22);
eine Fahrzeugstruktur (16) im Abstand von der Wärmesenkenoberfläche (22) und angeordnet, um dazwischen einen Hohlraum zu begrenzen,
mindestens ein im Hohlraum angeordnetes thermoelektrisches Modul (14) mit entgegengesetzten Seiten, wobei eine der Seiten mit der Wärmesenkenoberfläche (22) verbunden ist und die andere der Seiten mit der Fahrzeugstruktur (16) verbunden ist, die als Wärmesenke dient, wenn elektrischer Strom durch das thermoelektrische Modul (14) geleitet wird, **dadurch gekennzeichnet, dass** die Fahrzeugstruktur (16) eine lasttragende Struktur des Fahrzeugs ist.

2. Thermoelektrische Pumpe-Anordnung (10) nach Anspruch 1, bei der die lasttragende Fahrzeugstruktur (16) aus der aus einem Fahrzeugrahmen, einem Träger, einer Stütze und der Fahrzeugkarosserie bestehenden Gruppe ausgewählt ist.

3. Thermoelektrische Pumpe-Anordnung (10) nach Anspruch 1, bei der die lasttragende Fahrzeugstruktur (16) eine Mehrzahl von Rippen (24) einschließt, die in thermischer Verbindung mit einem zentralen Luftleitungshohlraum (26) eines Heiz- und Kühlsystems (20) und der thermoelektrischen Pumpe-Anordnung (10) angeordnet sind.

4. Thermoelektrische Pumpe-Anordnung (10) nach Anspruch 3, bei der das Heiz- und Kühlsystem (20) mindestens ein Gebläse (28) einschließt, das Umgebungsluft in einem Ansaugpfad (I) durch den zentralen Luftleitungshohlraum (26) und über die Mehrzahl von Rippen (24) saugt.

5. Thermoelektrische Pumpe-Anordnung (10) nach Anspruch 1, bei der das thermoelektrische Modul (12) an der lasttragenden Fahrzeugstruktur (16) mittels einer Mehrzahl von Befestigungselementen (40) befestigt ist, die sich durch Befestigungselementdurchlässe (22a) der Wärmesenkenoberfläche (22) erstrecken, um mechanisch mit der Fahrzeugstruktur (16) in Eingriff zu treten.

6. Thermoelektrische Pumpe-Anordnung (10) nach Anspruch 1, bei der das mindestens eine thermoelektrische Modul (14) über eine mechanische oder chemische Verbindung auf der Wärmesenkenoberfläche (22) angeordnet ist.

7. Thermoelektrische Pumpe-Anordnung (10) nach Anspruch 1, bei der die thermoelektrische Pumpe-Anordnung (10) weiter eine an der Fahrzeugstruktur (16) befestigte Wärmesenkenleitung (30) umfasst.

8. Thermoelektrische Pumpe-Anordnung (10) nach Anspruch 7, bei der die Wärmesenkenleitung (30) an der Fahrzeugstruktur (16) mittels einer Mehrzahl von Befestigungselementen (40) befestigt ist, die sich durch Leitungsbohrungen (42) der Wärmesenkenleitung (30) erstrecken.

9. Thermoelektrische Pumpe-Anordnung (10) nach Anspruch 3, bei der die Wärmesenkenoberfläche (22) eine Mehrzahl von Befestigungselementdurchlässen (22b) enthält, die einen Hindurchtritt und einen mechanischen Eingriff der Befestigungselemente (40) mit dem Luftleitungshohlraum (26) erlauben.

10. Thermoelektrische Pumpe-Anordnung (10) nach Anspruch 7, bei der die Wärmesenkenleitung (30) an der Fahrzeugstruktur (16) mittels mindestens einer Klemme oder Umfangslippe (38) befestigt ist.

11. Thermoelektrische Pumpe-Anordnung (10) nach Anspruch 7, bei der die Wärmesenkenleitung (30) über einer Instrumententafelträgeröffnung (33) befestigt ist, um eine Abfuhr von Warmluft von der Wärmesenkenoberfläche (22) zum Motorraum zu erlauben.

12. Thermoelektrische Pumpe-Anordnung (10) nach Anspruch 5, bei der die Wärmesenkenoberfläche (22) aus Material hoher Wärmeleitfähigkeit besteht, das aus der aus Magnesium, Aluminium und Kupfer bestehenden Gruppe ausgewählt ist.

13. Verfahren zur Herstellung einer thermoelektrischen Pumpe-Anordnung (10), umfassend die Schritte:
Anordnen von mindestens einem thermoelektrischen Modul (14) auf einer Wärmesenkenoberfläche (22), um eine thermoelektrische Vorrichtung (12) zu bilden;
Befestigen der thermoelektrischen Vorrichtung (12) an einer lasttragenden Fahrzeugstruktur (16), so dass sich die thermoelektrische Vorrichtung (12) in thermischer Verbindung mit der lasttragenden Fahrzeugstruktur (16) befindet;
Anordnen einer Wärmesenkenleitung (30) über der thermoelektrischen Vorrichtung (12); und
Befestigen der Wärmesenkenleitung (30) an der lasttragenden Fahrzeugstruktur (16).

14. Verfahren nach Anspruch 13, bei dem das Befestigen der thermoelektrischen Vorrichtung (12) weiter den Schritt eines Einsetzens von Befestigungselementen (30) durch eine Mehrzahl von Befestigungselementdurchlässen (22a) in der Wärmesenkenoberfläche (22) umfasst, um sie mechanisch mit der lasttragenden Fahrzeugstruktur (16) in Eingriff zu bringen.

15. Verfahren nach Anspruch 13, bei dem das Befestigen der Wärmesenkenleitung (30) weiter den Schritt eines Einsetzens von Befestigungselementen (40) durch eine Mehrzahl von Wärmesenkenleitungsbohrungen (42) einer Wärmesenkenleitung (30) und Befestigungselementdurchlässen (22a) in der Wärmesenkenoberfläche (22) umfasst, um sie mechanisch mit der lasttragenden Fahrzeugstruktur (16) in Eingriff zu bringen.

16. Verfahren nach Anspruch 13, weiter umfassend die Schritte:
Leiten eines elektrischen Stroms durch das mindestens eine thermoelektrische Modul (14) in einer ersten Richtung, um die Temperatur der lasttragenden Fahrzeugstruktur (16) zu erhöhen, oder Leiten des elektrischen Stroms durch das thermoelektrische Modul (14) in einer zweiten Richtung, um die Temperatur der Fahrzeugstruktur (16) zu verringern.

17. Verfahren nach Anspruch 16, weiter umfassend den Schritt eines Ansaugens von Umgebungsluft über die Fahrzeugstruktur (16).

## Revendications

1. Ensemble de pompe thermoélectrique (10) comprenant :
une surface formant dissipateur ou puits thermique (22) ;
une structure de véhicule (16) espacée de ladite surface formant dissipateur ou puits thermique (22) et disposée de façon à définir une cavité entre elles;
au moins un module thermoélectrique (14) dont les côtés opposés sont disposés dans ladite cavité, l'un des dits côtés étant raccordé à ladite surface formant dissipateur ou puits thermique (22), l'autre des dits côtés étant raccordé à ladite structure de véhicule (16) qui joue le rôle d'un dissipateur ou puits thermique lorsque le courant électrique est dirigé à travers le module thermoélectrique (14),
**caractérisé en ce que** ladite structure de véhicule (16) est une structure porteuse du véhicule.

2. Ensemble de pompe thermoélectrique (10) selon la revendication 1, dans lequel la structure porteuse du véhicule (16) est sélectionnée dans le groupe comprenant le châssis du véhicule, un longeron, un support et la carrosserie du véhicule.

3. Ensemble de pompe thermoélectrique (10) selon la revendication 1, dans lequel la structure porteuse du véhicule (16) comprend une pluralité d'ailettes (24) positionnées de façon à être en communication thermique avec une cavité centrale (26) formant gaine d'air d'un circuit de chauffage et de refroidissement (20) et avec l'ensemble de pompe thermoélectrique (10).

4. Ensemble de pompe thermoélectrique (10) selon la revendication 3, dans lequel le circuit de chauffage et de refroidissement (20) comprend au moins un ventilateur (28) qui force l'air ambiant autour d'un chemin d'admission (I) par la cavité centrale (26) formant gaine d'air et à travers la pluralité d'ailettes (24).

5. Ensemble de pompe thermoélectrique (10) selon la revendication 1, dans lequel le module thermoélectrique (12) est fixé sur la structure porteuse du véhicule (16) par une pluralité de fixations (40) qui s'étendent à travers des passages de fixation (22a) de la surface formant dissipateur thermique (22) de façon à s'engager mécaniquement avec la structure du véhicule (16).

6. Ensemble de pompe thermoélectrique (10) selon la revendication 1, dans lequel au moins un module thermoélectrique (14) est disposé sur la surface formant dissipateur thermique (22) via une liaison mécanique ou chimique.

7. Ensemble de pompe thermoélectrique (10) selon la revendication 1, dans lequel l'ensemble de pompe thermoélectrique (10) comprend en outre une gaine de dissipation thermique (30) fixée sur la structure du véhicule (16).

8. Ensemble de pompe thermoélectrique (10) selon la revendication 7, dans lequel la gaine de dissipation thermique (30) est fixée sur la structure du véhicule (16) par une pluralité de fixations (40) que s'étendent à travers des traversées (42) dans la gaine de dissipation thermique (30).

9. Ensemble de pompe thermoélectrique (10) selon la revendication 3, dans lequel la surface formant dissipateur thermique (22) comprend une pluralité de passages de fixation (22b) qui permettent le passage et l'engagement mécanique des fixations (40) avec la cavité (26) formant gaine d'air.

10. Ensemble de pompe thermoélectrique (10) selon la revendication 7, dans lequel la gaine de dissipation thermique (30) est fixée sur la structure du véhicule (16) par au moins une pince ou lèvre périphérique (38).

11. Ensemble de pompe thermoélectrique (10) selon la revendication 7, dans lequel la gaine de dissipation thermique (30) est fixée sur un orifice (32) de longeron du tableau de bord pour permettre l'évacuation de l'air chaud de la surface formant dissipateur thermique (22) vers le compartiment moteur.

12. Ensemble de pompe thermoélectrique (10) selon la revendication 5, dans lequel la surface formant dissipateur thermique (22) est constituée d'un matériau à conductivité thermique élevée sélectionné dans le groupe comprenant le magnésium, l'aluminium et le cuivre.

13. Procédé de fabrication d'un ensemble de pompe thermoélectrique (10), comprenant les étapes consistant à :
disposer au moins un module thermoélectrique (14) sur une surface formant dissipateur ou puits thermique (22) pour former un dispositif thermoélectrique (12) ;
fixer le dispositif thermoélectrique (12) sur une structure porteuse du véhicule (16) de telle sorte que le dispositif thermoélectrique (12) soit en communication thermique avec la structure porteuse du véhicule (16) ;
disposer une gaine de dissipation thermique (30) au-dessus du dispositif thermoélectrique (12) ; et
fixer la gaine de dissipation thermique (30) sur la structure porteuse du véhicule (16).

14. Procédé selon la revendication 13, dans lequel la fixation du dispositif thermoélectrique (12) comprend en outre l'étape consistant à insérer des fixations (40) à travers une pluralité de passages de fixation (22a) dans la surface formant dissipateur thermique (22) de façon à les engager mécaniquement avec la structure du véhicule (16).

15. Procédé selon la revendication 13, dans lequel la fixation de la gaine de dissipation thermique (30) comprend l'étape consistant à insérer des fixations (40) à travers une pluralité de traversées (42) d'une gaine de dissipation thermique (30) et de passages de fixation (22b) dans la surface formant dissipateur thermique (22) de façon à les engager mécaniquement avec la structure porteuse du véhicule (16).

16. Procédé selon la revendication 13, comprenant en outre les étapes consistant à :
diriger un courant électrique à travers au moins un module thermoélectrique (14) dans un premier sens pour augmenter la température de la structure porteuse du véhicule (16) ou à diriger le courant électrique à travers le module thermoélectrique (14) dans un deuxième sens pour diminuer la température de la structure du véhicule (16).

17. Procédé selon la revendication 16, comprenant en outre l'étape consistant à forcer le passage de l'air ambiant à travers la structure du véhicule (16).
